# EUROPEAN PATENT SPECIFICATION

(11) **EP 1 366 961 B1**
(45) Date of publication and mention of the grant of the patent: **26.07.2006**
(21) Application number: 03012302.0
(22) Date of filing: 28.05.2003
(51) Int. Cl.: B60R 21/01

(54) **Vehicle seat occupant retaining system**
Insassenschutzvorrichtung für ein Fahrzeug
Système de retenue pour occupant d'un siège de véhicule

(30) Priority: 29.05.2002 IT TO20020458
(43) Date of publication of application: 03.12.2003
(73) Proprietor: C.R.F. Società Consortile per Azioni, 10043 Orbassano (Torino) (IT)
(72) Inventor: Solinas, Maria Rita, c/o C.R.F. Societa', 10043 Orbassano (IT); Griotto, Gabriella, c/o C.R.F. Societa' Consortile, 10043 Orbassano (IT); Puppini, Roberto, c/o C.R.F. Societa' Consortile, 10043 Orbassano (IT); Gobetto, Enrico, c/o C.R.F. Societa' Consortile, 10043 Orbassano (IT)
(74) Representative: Cerbaro, Elena

(56) References cited:
- DE-A- 19 844 149
- DE-A- 19 960 644
- US-A- 5 718 451
- US-A- 6 082 764
- US-B1- 6 256 565
- BILLEN K: "Occupant Classification System for Smart Restraint Systems" SAE PAPER 1999-01-0761, XX, XX, January 1999 (1999-01), pages 33-38, XP002184965

## Description

The present invention relates to a vehicle seat occupant retaining system.

Retaining systems are known comprising an airbag device and a retaining device featuring a seat-belt, and which are fitted to a front (driving/passenger) seat of a vehicle.

More specifically, airbag devices are known which inflate bags of different capacities to provide protection according to the degree of impact of the vehicle, and which may also comprise a gas generator for providing different gas flows, each with a specific flow rate curve.

Seat-belts are also known featuring tensioning devices for reducing the useful length of the belt simultaneously with activation of the airbag device.

Known devices of the above type provide for a high degree of protection by regulating performance on the basis of various detected impact characteristics, but normally fail to take into account the physical characteristics and/or location inside the passenger compartment of the vehicle of the vehicle seat occupant.

Nor are such devices adjusted beforehand on the basis of impending-impact characteristics.

DE19960644, considered as closest prior art, described an adjustable restraint system for motor vehicles, comprising an impact sensor for detecting an impact and a number of components (airbags, belt tighteners, knee padding, head rests). The system is provides a regulation of the components after the impact.

It is an object of the present invention to provide a retaining system enabling even more effective use of the airbag device and seat-belts, to eliminate the drawbacks of known systems.

According to the present invention, there is provided a retaining system for retaining an occupant of a seat of a vehicle, wherein at least one airbag type retaining device and one seat-belt type retaining device cooperate with the seat of the vehicle; the retaining system comprising electronic control means comprising:
- acquisition means for acquiring a quantity indicating the physical characteristics and/or location inside the passenger compartment of the vehicle of the occupant of the seat;
- assessment means for predicting the impact mode of the vehicle with a fixed or moving obstacle; and
- control means for acting on said airbag type retaining device and said seat-belt type retaining device on the basis of signals generated by said acquisition means and said assessment means.

Operation of the airbag device and the seat-belt is thus regulated according to the physical characteristics and/or location inside the passenger compartment of the vehicle of the occupant of the seat.

Moreover, the airbag device and seat-belt are regulated beforehand on the basis of impending-impact characteristics.

A preferred, non-limiting embodiment of the invention will be described by way of example with reference to the accompanying drawings, in which:
Figure 1 shows, schematically, a vehicle seat occupant retaining system in accordance with the present invention;
Figure 2 shows a block diagram of the operations performed by the system according to the present invention.

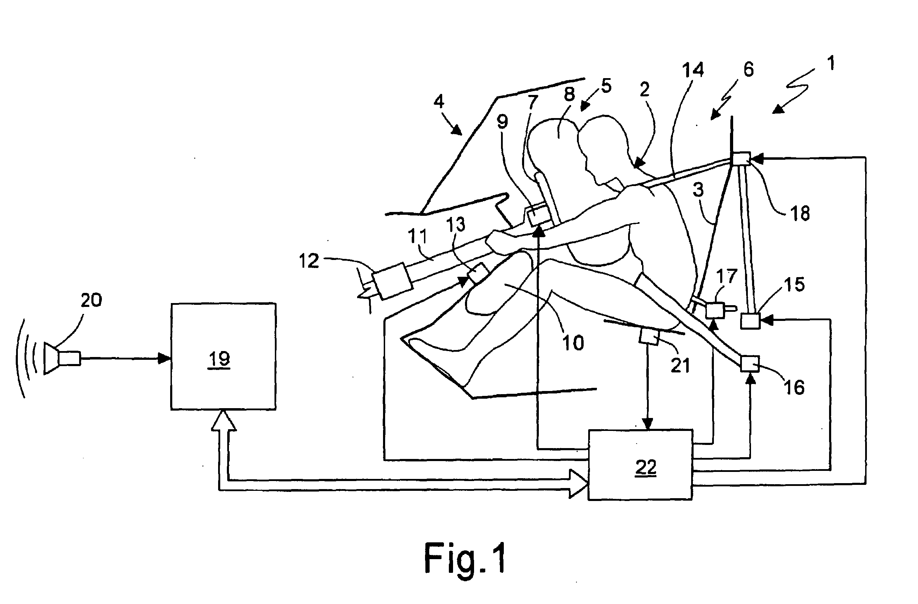

Number 1 in Figure 1 indicates as a whole a retaining system for retaining an occupant 2 of a seat 3 of a vehicle 4, and substantially comprising an airbag type first retaining device 5, and a seat-belt type second retaining device 6.

In the embodiment described, retaining system 1 is shown fitted to the front driving seat 3, but may obviously also be fitted to the front passenger seat or to any other seat of any other vehicle.

Preferably, though not necessarily, seat 3 moves longitudinally to conform with inertial movement of vehicle 4 during impact.

More specifically, retaining device 5, of known type, is installed in the body of steering wheel 7 of vehicle 4, and is a two-bag type, i.e. comprising a first and a second bag 8 of different capacities, e.g. 45 and 60 litres.

Retaining device 5 is also connected to a four-level gas generator 9 for providing gas flows with respective first, second, third, and fourth flow rate curves.

An auxiliary airbag type retaining device ( knee-bag ) 10 may also be provided beneath steering wheel 7 to protect the knees of occupant 2 of seat 3. More specifically, auxiliary retaining device 10 is preferably a one-bag type. i.e. comprising one bag of, say, 12-litre capacity, and is inflated by an auxiliary gas generator 13.

Steering wheel 7 is fitted to a steering column 11 fitted with an axial collapse device 12 set to a predetermined collapse load, e.g. 1200 N.

Retaining device 6 comprises a seat-belt 14, in turn comprising a known electric pretensioning device 15 on the shoulder portion; a first explosive pretensioning device 16 fitted to the point of attachment of seat-belt 14 to the vehicle body; and a second explosive pretensioning device 17 fitted to the buckle to which seat-belt 14 is connected.

Seat-belt 14 also comprises a load limiting device 18 for limiting the load on the drivers shoulder to a predetermined maximum value in the event of impact, and which provides for three different load levels: low, medium, high, e.g. 2000, 2055, 2200 N respectively.

Retaining system 1 cooperates with a known impact predicting/detecting device 19, which comprises a number of sensors 20, e.g. proximity sensors, radar sensors, etc. (shown schematically), and which provides for determining impending impact between vehicle 4, equipped with retaining system 1, and a fixed or moving obstacle.

Impact predicting/detecting device 19 generates at least the following output signals:
- a preimpact or precrash signal indicating vehicle 4, equipped with retaining system 1, is nearing and will inevitably collide with an obstacle;
- an impact signal indicating the estimated crash time T_{CRASH} at which the vehicle is expected to impact the obstacle; and
- a pre-set signal indicating the predicted impact mode, and which, in particular, may indicate an aligned impact mode, in which practically the whole front portion of vehicle 4 collides with the obstacle, and a non-aligned impact mode, in which only part of the front portion of vehicle 4 collides with the obstacle.

Retaining system 1 also comprises sensors 21 for detecting data indicating the physical characteristics and/or location inside the passenger compartment of vehicle 4 of occupant 2 of seat 3.

In a preferred embodiment of the present invention, sensors 21 detect the percentile of occupant 2 of seat 3, but may obviously detect data, other than the percentile, of occupant 2 of seat 3, e.g. the height of occupant 2 of seat 3, or the occupants position with respect to the dashboard of the vehicle.

Alternatively, the data indicating the physical characteristics and/or location inside the passenger compartment of vehicle 4 of occupant 2 of seat 3 may be entered personally by occupant 2 of seat 3, e.g. by inserting into a card reader a card, e.g. a microprocessor card (a sort of electronic identity card) on which the data is recorded permanently, or vehicle 4 may be equipped with a system for reading the data on the card automatically by radio.

Retaining devices 5 and 6 are controlled by an electronic central control unit 22 communicating with impact predicting/detecting device 19 and operating according to the present invention to control retaining device 5, electric pretensioning device 15, and explosive pretensioning devices 16 and 17.

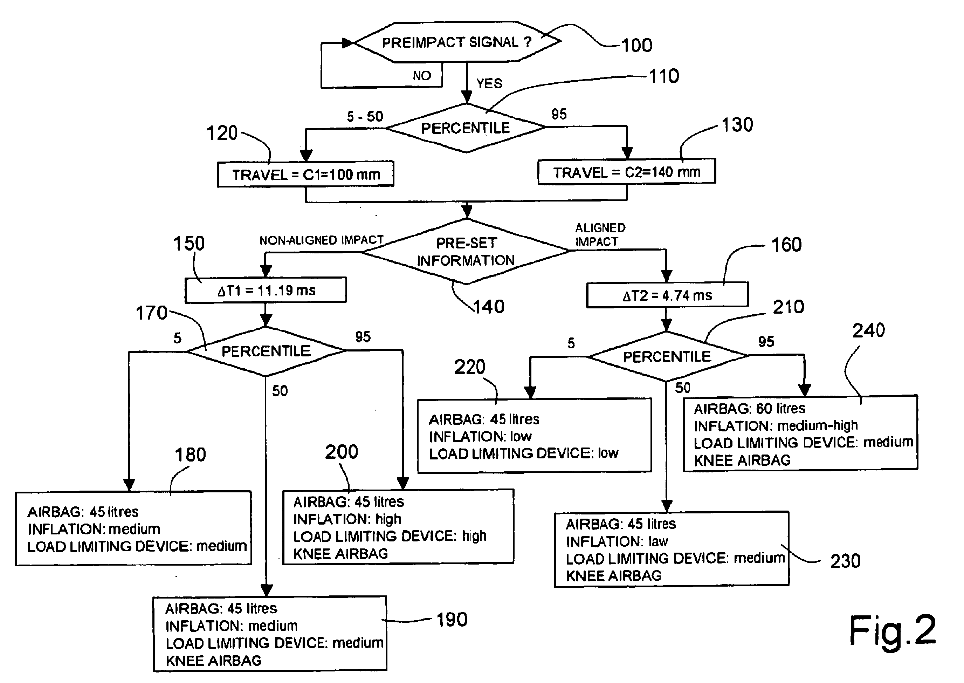

Figure 2 shows the control operations performed according to the present invention.

To begin with, a block 100 checks the presence of a preimpact signal, i.e. whether vehicle 4 equipped with retaining system 1 is nearing and will inevitably collide with an obstacle.

In the event of a negative response, block 100 remains on standby; conversely, block 100 goes on to a block 110 which determines and stores the percentile PC of occupant 2 of seat 3.

If percentile PC falls within a first range of values, and in particular is close to a low or intermediate value of, say, 5 and 50 respectively, block 110 goes on to a block 120, which sets the travel of electric pretensioning device 15 to a first value C1 of, say, 100 mm.

Conversely, if percentile PC falls within a second range of values, and in particular is close to a high value of, say, 95, block 110 goes on to a block 130, which sets the travel of electric pretensioning device 15 to a second value C2 higher than first value C1 and of, say, 140 mm.

Blocks 120 and 130 are both followed by a block 140, which checks the status of the pre-set signal. More specifically, if a non-aligned impact mode is determined, block 140 goes on to a block 150; conversely, if an aligned impact mode is determined, block 140 goes on to a block 160.

Block 150 acquires the estimated crash time T_{CRASH} information, and establishes an ignition time T_{ACC1} of explosive pretensioning devices 16 and 17, which precedes crash time T_{CRASH} by a first time interval ΔT1 (e.g. of 11.19 ms).

Block 160 acquires the estimated crash time T_{CRASH} information, and establishes an ignition time T_{ACC2} of explosive pretensioning devices 16 and 17, which precedes crash time T_{CRASH} by a second time interval ΔT2 (e.g. of 4.7 ms). Second time interval ΔT2 is shorter than first time interval ΔT1, so that, in the event of aligned impact, explosive pretensioning devices 16 and 17 are ignited sooner than in the event of non-aligned impact.

Block 150 is followed by a block 170, which again determines the value of percentile PC; more specifically:
- if percentile PC is close to a low value (5 in the example shown), block 170 goes on to a block 180;
- if percentile PC is close to an intermediate value (50 in the example shown), block 170 goes on to a block 190; and
- if percentile PC is close to a high value (95 in the example shown), block 170 goes on to a block 200.

Block 180 activates retaining system 1 according to a first operating mode, in which:
- the smaller-capacity (45-litre) bag 8 is inflated;
- gas generator 9 supplies gas at an intermediate flow rate; and
- load limiting device 18 provides for a medium load value.

Block 190 activates retaining system 1 according to a second operating mode, in which:
- the smaller-capacity (45-litre) bag 8 is inflated;
- gas generator 9 supplies gas at an intermediate flow rate;
- auxiliary retaining device 10 is activated; and
- load limiting device 18 provides for a medium load value.

Block 200 activates retaining system 1 according to a third operating mode, in which:
- the smaller-capacity (45-litre) bag 8 is inflated;
- gas generator 9 supplies gas at a high flow rate;
- auxiliary retaining device 10 is activated; and
- load limiting device 18 provides for a high load value.

Block 160 is followed by a block 210, which again determines the value of percentile PC; more specifically:
- if percentile PC is close to a low value (5 in the example shown), block 210 goes on to a block 220;
- if percentile PC is close to an intermediate value (50 in the example shown), block 210 goes on to a block 230; and
- if percentile PC is close to a high value (95 in the example shown), block 210 goes on to a block 240.

Block 220 activates retaining system 1 according to a fourth operating mode, in which:
- the smaller-capacity (45-litre) bag 8 is inflated;
- gas generator 9 supplies gas at a low flow rate; and
- load limiting device 18 provides for a low load value.

Block 230 activates retaining system 1 according to a fifth operating mode, in which:
- the smaller-capacity (45-litre) bag 8 is inflated;
- gas generator 9 supplies gas at a low flow rate;
- auxiliary retaining device 10 is activated; and
- load limiting device 18 provides for a medium load value.

Block 240 activates retaining system 1 according to a sixth operating mode, in which:
- the larger-capacity (60-litre) bag 8 is inflated;
- gas generator 9 supplies gas at a medium-high flow rate;
- auxiliary retaining device 10 is activated; and
- load limiting device 18 provides for a medium load value.

Clearly, changes may be made to the vehicle seat occupant retaining system as described and illustrated herein without, however, departing from the scope of the present invention.

The invention is defined by the appended claims only.

## Claims

1. A retaining system (1) for retaining an occupant (2) of a seat (3) of a vehicle (4), wherein at least one airbag type retaining device (5) and one seat-belt type retaining device (6) cooperate with the seat (3) of the vehicle (4); the retaining system (1) comprising electronic control means (22) comprising:
- acquisition means (100, 21) for acquiring a quantity indicating the physical characteristics and/or location inside the passenger compartment of the vehicle (4) of the occupant (2) of he seat (3);
- assessment means (140, 19) for determining an aligned impact mode wherein practically the whole front portion of the vehicle (4) collides with an obstacle and a non-aligned impact mode of the vehicle wherein part of the front portion of the vehicle (4) collides with an obstacle, said obstacle being a fixed or moving obstacle; and
- control means (120, 130, 150, 160, 180, 190, 200, 220, 230, 240) for acting on said airbag type retaining device (5) and said seat-belt type retaining device (6) on the basis of signals generated by said acquisition means (100, 21) and said assessment means (140, 19)
**characterized in that** on the basis of the impact mode determined, said control means (120, 130) regulate the ignition time (150, 160) of explosive pretensioning means (16, 17) associated with said seat-belt (14).

2. A system as claimed in Claim 1, wherein said acquisition means (100, 21) determine by measurement the physical characteristics and/or location inside the passenger compartment of the vehicle (4) of the occupant (2) of the seat (3).

3. A system as claimed in Claim 1, wherein said acquisition means (100, 21) determine the physical characteristics and/or location inside the passenger compartment of the vehicle (4) of the occupant (2) of the seat (3) by means of data entered personally by the occupant (2) of the seat (3).

4. A system as claimed in any one of the foregoing Claims, wherein said acquisition means (100, 21) determine the percentile (PC) of the occupant (2) of the seat (3).

5. A system as claimed in Claim 4, wherein said control means (120, 130) receive information relative to said percentile (PC); said control means (120, 130) regulating, on the basis of the information received, the travel of at least one pretensioning device (15) associated with a seat-belt (14).

6. A system as claimed in Claim 5, wherein said control means (120, 130) set a first travel value (C1) of said pretensioning device (15) when said percentile (PC) falls within a first range of values; said control means (120, 130) setting a second travel value (C2) of said pretensioning device (15) when said percentile (PC) falls within a second range of values.

7. A system as claimed in Claim 1, wherein, if a non-aligned impact mode is determined, said control means (120, 130) establish an ignition time T_{ACC1} of said explosive pretensioning means (16, 17), which precedes the predicted crash time T_{CRASH} by a first predetermined time interval ΔT1; if an aligned impact mode is determined, said control means (120, 130) establish an ignition time T_{ACC2} of said explosive pretensioning means (16, 17), which precedes the predicted crash time T_{CRASH} by a second predetermined time interval ΔT2; said second interval being shorter than said first interval.

8. A system as claimed in any one of the foregoing Claims, wherein said acquisition means (100, 21) regulate:
- the capacity of a bag (8) of said airbag type retaining device (5); and/or
- the flow rate of the gas supplied to said bag (8) on the basis of the type determined.

9. A system as claimed in Claim 8, wherein said seat-belt type retaining device (6) has at least one load limiting device (18) providing for different load levels; said control means (120, 130) regulating the load provided by said load limiting device (18) on the basis of the physical characteristics and/or location inside the passenger compartment of the vehicle (4) of the occupant (2) of the seat (3).

## Patentansprüche

1. Haltesystem (1) eines Fahrzeugs (4), zum Halten eines Insassen (2) eines Sitzes (3), wobei zumindest eine Airbag-Typ-Haltevorrichtung (5) und eine Sitz-Gurt-Typ-Haltevorrichtung (6) mit dem Sitz (3) des Fahrzeugs (4) zusammenwirken und das Haltesystem (1) elektronische Steuerungsmittel (22) aufweist, aufweisend:
Erfassungsmittel (100, 21) zum Erfassen einer Quantität, welche die physikalischen Charakteristiken und/oder den Ort des Insassen (2) des Sitzes (3) innerhalb des Passagierraums des Fahrzeugs (4) indiziert,
Bewertungsmittel (140, 19) zum Bestimmen eines Ausgerichtet-Zusammenstoß-Modus, bei dem praktisch der gesamte vordere Bereich des Fahrzeugs (4) mit einem Hindernis kollidiert, und eines Nicht-Ausgerichtet-Zusammenstoß-Modus, bei dem ein Teil des vorderen Bereichs des Fahrzeugs (4) mit einem Hindernis kollidiert, wobei das Hindernis ein festes oder ein bewegtes Hindernis ist, und
Steuerungsmittel (120, 130, 150, 160, 180, 190, 200, 220, 230, 240) zum Wirken auf die Airbag-Typ-Haltevorrichtung (5) and die Sitz-Gurt-Typ-Haltevorrichtung (6) auf der Basis von Signalen, die durch die Erfassungsmittel (100, 21) und die Bewertungsmittel (140, 19) erzeugt werden,
**dadurch gekennzeichnet, dass** die Steuerungsmittel (120, 130), ermittelt auf der Basis des Zusammenstoß-Modus, den Zündzeitpunkt (150, 160) der Explosiv-Vorspannungsmittel (16, 17) regeln, die mit dem Sitz-Gurt (14) assoziiert sind.

2. System gemäß Anspruch 1, wobei die Erfassungsmittel (100, 21) durch Messung die physikalischen Charakteristiken und/oder den Ort des Insassen (2) des Sitzes (3) innerhalb des Passagierraums des Fahrzeugs (4) bestimmen.

3. System gemäß Anspruch 1, wobei die Erfassungsmittel (100, 21) die physikalischen Charakteristiken und/oder den Ort des Insassen (2) des Sitzes (3) innerhalb des Passagierraums des Fahrzeugs (4) mittels Daten bestimmt, die persönlich durch den Insassen (2) des Sitzes (3) eingegeben sind.

4. System gemäß einem der vorangegangenen Ansprüche, wobei die Erfassungsmittel (100, 21) das Perzentil (PC) des Insassen (2) des Sitzes (3) bestimmen.

5. System gemäß Anspruch 4, wobei die Steuerungsmittel (120, 130) Informationen relative zu dem Perzentil (PC) aufnehmen und die Steuerungsmittel (120, 130) auf der Basis der aufgenommenen Informationen den Bewegungsweg von zumindest einer Vorspannvorrichtung (15) regeln, das mit dem Sitz-Gurt (14) assoziiert ist.

6. System gemäß Anspruch 5, wobei die Steuerungsmittel (120, 130) einen ersten Bewegungswert (C1) der Vorspannvorrichtung (15) setzen, wenn das Perzentil (PC) in einen ersten Bereich von Werten fällt, und die Steuerungsmittel (120, 130) einen zweiten Bewegungswert (C2) setzen, wenn das Perzentil (PC) in einen zweiten Bereich von Werten fällt.

7. System gemäß Anspruch 1, wobei, wenn ein Nicht-Ausgerichtet-Zusammenstoß-Modus ermittelt ist, die Steuerungsmittel (120, 130) einen Zündzeitpunkt T_{ACC1} des Explosiv-Vorspannmittels (16, 17) festsetzen, welcher dem vorhergesagten Zusammenstoßzeitpunkt T_{CRASH} um ein erstes vorbestimmtes Zeitintervall ΔT1 vorausgeht, und wenn ein Ausgerichtet-Zusammenstoß-Modus ermittelt ist, die Steuerungsmittel (120, 130) einen Zündzeitpunkt T_{ACC2} des Explosiv-Vorspannmittels (16, 17) festsetzen, welcher dem vorhergesagten Zusammenstoßzeitpunkt T_{CRASH} um ein zweites vorbestimmtes Zeitintervall ΔT2 vorausgeht, wobei das zweite Intervall kürzer als das erste Intervall ist.

8. System gemäß einem der vorangegangenen Ansprüche, wobei die Erfassungsmittel (100, 21) regeln:
die Kapazität eines Sacks (8) der Airbag-Typ-Haltevorrichtung (5) und/oder
die Flussrate des Gases, das dem Sack zugeführt wird, auf der Basis des ermittelten Typs.

9. System gemäß Anspruch 8, wobei die Sitz-Gurt-Typ-Haltevorrichtung (6) zumindest eine last-limitierende Vorrichtung (18) aufweist, die unterschiedliche Belastungshöhen berücksichtigt, wobei die Steuerungsmittel (120, 130) die Last, die durch die last-limitierende Vorrichtung (18) berücksichtigt wird, auf der Basis der physikalischen Charakteristiken und/oder des Ortes des Insassen (2) des Sitzes (3) innerhalb des Passagierraums des Fahrzeugs (4) regeln.

## Revendications

1. Système de retenue (1) pour occupant (2) d'un siège (3) de véhicule (4), dans lequel au moins un dispositif de retenue du type airbag (5) (ou coussin gonflable) et un dispositif de retenue du type ceinture de sécurité (6) coopèrent avec le siège (3) du véhicule (4), le système de retenue (1) comprenant des moyens de contrôle électronique (22) comprenant :
- des moyens d'acquisition (100, 21) pour acquérir une quantité indiquant les caractéristiques physiques et/ou l'emplacement à l'intérieur du compartiment de passagers du véhicule (4) de l'occupant (2) du siège (3) ;
- des moyens d'évaluation (140, 19) pour déterminer un mode d'impact aligné, dans lequel pratiquement toute la partie avant du véhicule (4) entre en collision avec un obstacle, et un mode d'impact non aligné du véhicule, dans lequel une partie de la partie avant du véhicule (4) entre en collision avec un obstacle, ledit obstacle étant un obstacle fixe ou en mouvement ; et
- des moyens de contrôle (120, 130, 150, 160, 180, 190, 200, 220, 230, 240) pour agir sur ledit dispositif de retenue du type airbag (5) et ledit dispositif de retenue du type ceinture de sécurité (6) sur la base de signaux générés par lesdits moyens d'acquisition (100, 21) et lesdits moyens d'évaluation (140, 19),
**caractérisé en ce que**, sur la base du mode d'impact déterminé, lesdits moyens de contrôle (120, 130) régulent le temps d'allumage (150, 160) des moyens explosifs de précontrainte (16, 17) associés à ladite ceinture de sécurité (14).

2. Système selon la revendication 1, dans lequel lesdits moyens d'acquisition (100, 21) déterminent par mesure les caractéristiques physiques et/ou l'emplacement à l'intérieur du compartiment de passagers du siège (3) de l'occupant (2) du véhicule (4).

3. Système selon la revendication 1, dans lequel lesdits moyens d'acquisition (100, 21) déterminent les caractéristiques physiques et/ou l'emplacement, à l'intérieur du compartiment de passagers, de l'occupant (2) du siège (3) du véhicule (4) au moyen de données entrées personnellement par l'occupant (2) du siège (3).

4. Système selon l'une quelconque des revendications précédentes, dans lequel lesdits moyens d'acquisition (100, 21) déterminent le percentile (PC) de l'occupant (2) du siège (3).

5. Système selon la revendication 4, dans lequel lesdits moyens de contrôle (120, 130) reçoivent des informations concernant ledit percentile (PC), lesdits moyens de contrôle (120, 130) régulant, à partir des informations reçues, le déplacement d'au moins un dispositif de précontrainte (15) associé à une ceinture de sécurité (14).

6. Système selon la revendication 5, dans lequel lesdits moyens de contrôle (120, 130) règlent une première valeur de déplacement (C1) dudit dispositif de précontrainte (15), lorsque ledit percentile (PC) tombe dans une première plage de valeurs, lesdits moyens de contrôle (120, 130) réglant une seconde valeur de déplacement (C2) dudit dispositif de précontrainte (15) lorsque ledit percentile (PC) tombe dans une seconde plage de valeurs.

7. Système selon la revendication 1, dans lequel, si un mode d'impact non aligné est déterminé, lesdits moyens de contrôle (120, 130) établissent un temps d'allumage T_{ACC1} desdits moyens explosifs de précontrainte (16, 17), qui précède le temps de collision prévu T_{CRASH} d'un premier intervalle de temps prédéterminé ΔT1; si un mode d'impact aligné est déterminé, lesdits moyens de contrôle (120, 130) établissent un temps d'allumage T_{ACC2} desdits moyens de précontrainte explosifs (16, 17), qui précède le temps de collision prédit T_{CRASH} d'un second intervalle de temps prédéterminé ΔT2, ledit second intervalle étant plus court que ledit premier intervalle.

8. Système selon l'une quelconque des revendications précédentes dans lequel lesdits moyens d'acquisition (100, 21) régulent:
- la capacité d'un coussin (8) dudit dispositif de retenue du type airbag (5) et/ou
- le débit du gaz fourni audit coussin (8) sur la base du type déterminé.

9. Système selon la revendication 8, dans lequel ledit dispositif de retenue du type ceinture de sécurité (6) est pourvu d'au moins un dispositif de limitation de charge (18) permettant différents niveaux de charge, lesdits dispositifs de contrôle (120, 130) régulant la charge fournie par ledit dispositif de limitation de charge (18) sur la base des caractéristiques physiques et/ou l'emplacement à l'intérieur du compartiment de passagers du siège (3) de l'occupant (2) du véhicule (4).
